(19)

Europäisches
Patentamt

European
Patent Office

Office européen
des brevets

(11) **EP 3 154 022 A1**

(12) **EUROPEAN PATENT APPLICATION**

(43) Date of publication:
**12.04.2017 Bulletin 2017/15**

(51) Int Cl.:
***G06T 5/00*** (2006.01)

(21) Application number: **16020360.0**

(22) Date of filing: **29.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.10.2015 SI 201500239**

(71) Applicants:
• **Univerza v Ljubljani
1000 Ljubljana (SI)**
• **Univerzitet Crne Gore Elektrotehnicki
Fakultet Podgorica
81000 Podgorica (ME)**

(72) Inventors:
• **Guna, Joze
1000 Ljubljana (SI)**
• **Stankovic, Srdjan
81000 Podgorica (ME)**
• **Orovic, Irena
81000 Podgorica (ME)**
• **Stankovic, Ljubisa
81000 Podgorica (ME)**
• **Dakovic, Milos
81000 Podgorica (ME)**

(74) Representative: **Ivancic, Bojan
Inventio d.o.o.
Dolenjska cesta 11
1000 Ljubljana (SI)**

(54) **A METHOD OF COMPRESSIVE SENSING-BASED IMAGE FILTERING AND
RECONSTRUCTION, AND A DEVICE FOR CARRYING OUT SAID METHOD**

(57)    The present invention relates to a method for image processing comprising compressive sensing-based image filtering and intelligent removal of noise from images, and for image reconstruction/decompression, and to a device for carrying out said method. The system enables reconstruction of a natural image missing a great part of useful information. The method further enables filtering and removing of two types of noise from damaged natural images, that is a Gaussian noise and an impulse noise.

Fig. 1

EP 3 154 022 A1

**Description**

BACKGROUND OF THE INVENTION

Field of the invention

The present invention relates to a method for image processing comprising compressive sensing-based image filtering and intelligent removal of noise from images, and for image reconstruction/decompression, and to a device for carrying out said method.

Description of the Prior Art

Known solutions that describe image reconstruction are disclosed in patent documents CN104154999A, CN103868591A, CN102568017B, US8666180 B2, for example. Said known solutions mainly refer to multispectral systems of image calculation comprising special modules to calculate and capture images, thus, enabling scene reconstruction based on small set of data. Several known solutions disclose filtering in order to prevent faded textures and noise removal. However, said known solutions are limited only to images from certain fields, such as radar images, MRI images and similar, therefore, each type of image requires its own special and separate method and device.

BRIEF DESCRIPTION OF THE DRAWINGS

The invention will be more readily understood on reading the following description of a nonlimiting embodiment and with reference to the accompanying drawings where

Fig. 1 shows a block diagram of a device for compressive sensing based image filtering and reconstruction,
Fig. 2 shows a diagram describing the generator of random set of samples,
Fig. 3 shows a diagram describing the circuit for random number generator,
Fig. 4 shows a diagram describing the flexible version of random number generator,
Fig. 5 shows a diagram describing the L-estimate circuit for impulse noise removal,
Fig. 6 shows a fast sort circuit that is in embodiments of the L-estimation operation,
Fig. 7 shows a diagram with the realization of the adaptive gradient-based image reconstruction algorithm.

DETAILED DESCRIPTION OF THE PREFERRED EMBODIMENT

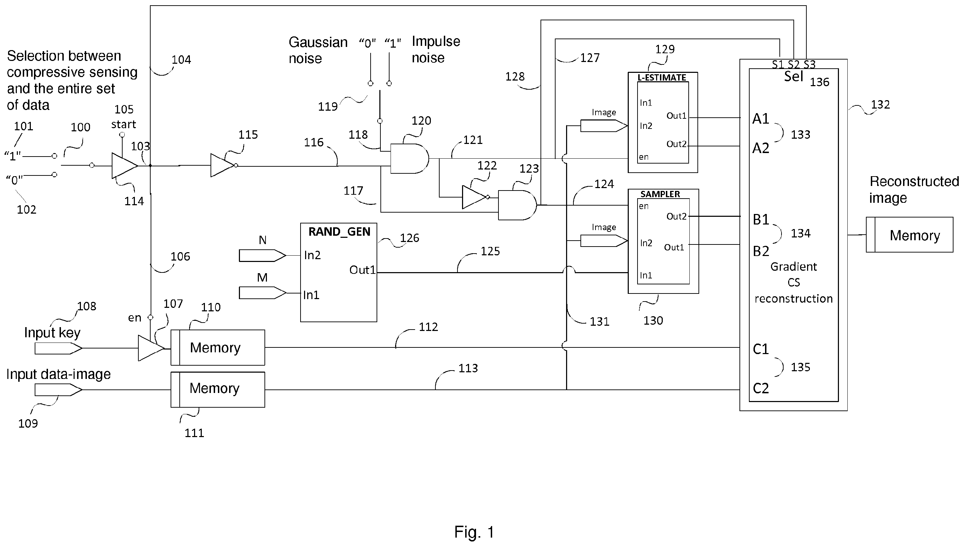

An entire architecture of a device for combined image reconstruction and noise removal and image reconstruction according to a method of compressive sensing is represented in Fig. 1. Said device comprises four subsystems which are a gradient-based reconstruction circuit 132, a L-estimation circuit 129, a sampling circuit 130 and a random sequence generator circuit 126. The system functions are controlled by means of SPDT switches 100, 119. The first switch 100 determines functioning in the following manner:

a) reconstruction according to the method of compressive sensing is performed when switch is in the position 101;
b) filtering-then-reconstruction according to the method of compressive sensing is performed when switch is in the position 102.

The second switch 119 determines the type of noise that is filtered during carrying out the method of noise removal from images. The switch 119 in the first position (1) determines noise removal from the input, wherein the L_estimation circuit 129 is activated. The switch 119 in the second position (0) determines the Gaussian noise removal, wherein said circuits 130, 126 are activated. Said circuits 129, 130 contribute to image denoising and output a limited set of random image samples and the set of its random positions within the image. The outputs from circuits 129, 130 are fed to the inputs of the image reconstruction circuit 132. Here, only one pair of inputs of circuit 132 is active i.e either an input A1-A2 representing output from the circuit 129, or an input B1-B2 representing output of the circuit 130, or input C1-C2 representing output from data store units 110 and 111.

A three-state buffer 114 determines whether the system is active or not. In the state of logical (0) at an input 105, the output from a circuit 114 represents a high-impedance state. Otherwise, the input from the circuit 114 is passed to the output of the circuit 114.

Said first switch 100 determines whether the image is only reconstructed according to the method of compressive sensing, or the image is filtered and reconstructed according to the method of compressive sensing. The image is an input parameter loaded from a circuit 109.

When the enable signal 105 at the three-state buffer 114 equals logical (1), and the switch 100 is in the position 101, the system performs direct-reconstruction of an image according to the method of compressive sensing. Namely, the logical value (1) is passed on line 103, and then consequently on lines 104, 106. The output signal 107 from the three-state buffer 114 is in the state of logical (1) and the input key 108 is passed to the data store unit 110. Said input key 108 contains the data of positions of available image samples. The available image samples are stored from the input 109.

The value of the logical (1) on the line 103 is inverted to logical (0) after passing an inverter 115. As a consequence, logical (0) on the lines 116, 117 is passed to the logical AND gates 120, 123, creating a signal of logical (0) at the lines 121, 124. Therefore, the enable signals for the circuits 129, 130 are set to values of logical (0) and said circuits 129, 130 are inactive.

Line 104 loads the signal of logical (1) to S3 input 136 of the circuit 132, while the lines 127, 128 load the signal of logical (0) to inputs S1 and S2. The combination of the signals equals S3 S2 S1=1 0 0.

The circuit and, respectively, the block 132 performs the reconstruction of an image based on the adaptive gradient algorithm. The circuit comprises a multiplexer. The select inputs combination S3 S2 S1=1 0 0 (value 3) on multiplexer means that the input C1 and C2 of the lines 135 is fed to the circuit for the image adaptive gradient reconstruction. Other possible combination is S3 S2 S1=0 1 0 (value 2) which allows forwarding the input from B1 and B2 lines 134 to the circuit for adaptive gradient reconstruction, and a combination S3 S2 S1=0 0 1 (value 1) which allows forwarding the input A1 and A2 of the lines 133 to the reconstruction circuit.

When the switch 100 is in the position 102 and the start signal 105 is in the state of the logical (1), the signal of logical (0) is generated on lines 103, 104 at the input S3=0, while the value of the three-state buffer 107 is in the high-impedance state. The value of the logical value (0) on the line 103 is transformed upon exit the inverter 115. Hence, the signal of the logical (1) occurs at lower inputs of AND gates 120, 123 of the line 116, 117, which means that the output signal of the AND gates 120, 123 will depend on the signal at the other input of said gate 120, 123.

In case of the impulse noise, the switch 119 loads logical (1) to the line 118. Consequently, the logical value (1) is transferred via AND gate 120 to the line 121, thus, enabling activating the L-estimate filter in the circuit 129. The L-estimation process eliminates all potentially damaged image samples (samples corrupted by the strong noise pulses, for instance). Then the remaining samples are fed as an input to the reconstruction circuit 132 in order to recover the damaged image segments. Note that in this case the logical value (1) is fed also to the select input S1 over the line 127. In this case, the combination S3 S2 S1=0 0 1 transfers signals Out1 and Out2 from the circuit 129 to the inputs A1 and A2 of the circuit 132.

The input for the L-estimate circuit 129 is represented as an entire image loaded from the data store unit 111 over the line 131. The output Out1 from the L-estimate circuit 129 is a random set of image samples that remains after the L-estimation procedure, while the output Out2 represents data of the position of said random set of image samples.

In case of the Gaussian noise, the input image is to be undersampled in a random manner, which is carried out by the circuit 130. A small subset of the samples thus obtained is fed to the circuit 132 in order to use it with reducing the noise and the reconstruction of the entire image.

In the case of Gaussian noise, the signal of the logical (0) is transferred from the switch 119 to the line 118. The inverter 122 converts the signal to the state of the logical (1), which is transferred to the input of the AND gate 123, and consequently, the output value of the AND gate 123 is in the state of the logical (1), which is transferred to to the line 128. Now, the value of the signal S2 is in the state of the logical (1), whereby the signal at the line 124 is also in the state of the logical (1), which represents the input signal en=1 for the circuit 130. In this case the combination of the select inputs is S3 S2 S1=0 1 0, meaning that the signals Out 1 and Out 2 from the circuit 130 are fed to the inputs B1 and B2, where they are used for adaptive gradient-based image reconstruction.

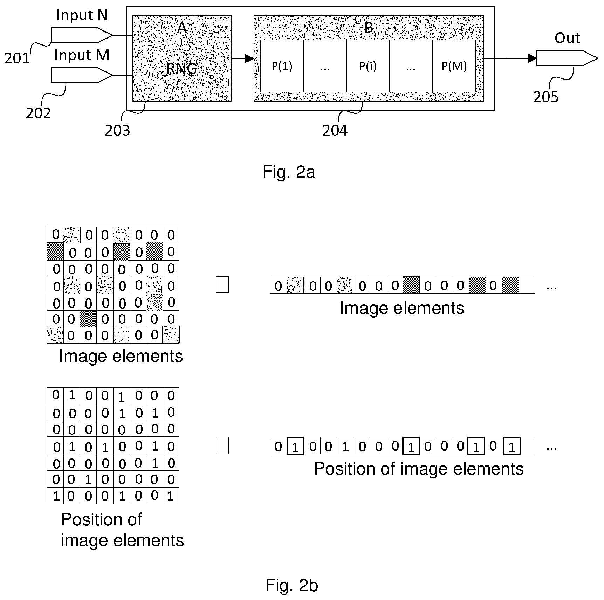

The circuit 130 has two inputs In1, In2, the image loaded from the data store unit 111 is forwarded to the input In2, and a random set of M image samples selected out of the total number of N samples and generated by the circuit 126 to the input In1. The circuit 126 generates M out of N randomly permuted integers. The embodiment of the circuit 126 is shown in Fig. 2. The output Out2 of the circuit 130 represents a small set of randomly chosen image samples, whereas the output Out1 of the circuit 130 represents the information about the positions of said image samples.

Fig. 2A shows a scheme of the circuit 126, which performs random sequence generation. Namely, for the input parameters N 201 and M 202, where M and N are integers and $N>M$, the circuit 126 generates randomly M out of N integer positions. The data of said positions is sentto the input of the circuit 130 to randomly discard a set of image pixels. The inputs 201, 202 and the output 205 represents the sequence of randomly selected M out of N integers. The device as shown in Fig. 2 is comprised of an A section 203 and a B section 204. The A section 203 represents the random number generator, while the B section 204 represents a memory unit to store M randomly generated numbers. The randomly generated sequence of M positions is the input to the circuit 130. Here applies that the image elements on the positions defined by random integer sequence of M numbers remain unchanged, whereas all other image elements are set to the value zero, and that the corresponding positions data array is formed by setting value (1) on the locations of the image elements defined by the random integer sequence M, while all the remining values in the position data are set to the value zero. The described embodiment is shown in Fig.2b, where a two dimensional data matrix is mapped to a one-dimensional structure using a row-major order.

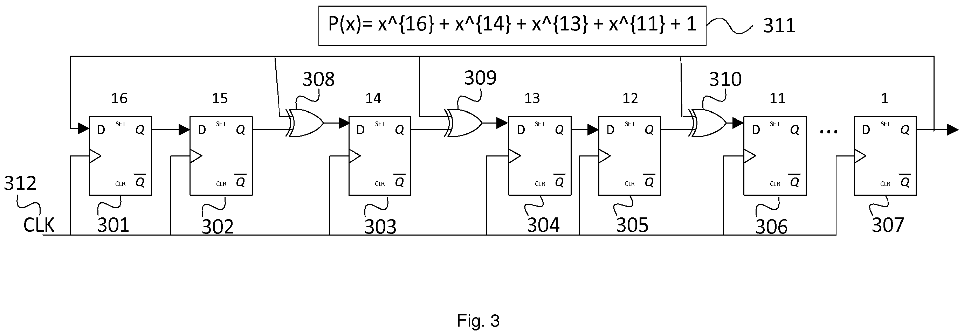

A simplified embodiment of random number generator is shown in Fig. 2A and is based on the Galois linear feedback shift register. The 16-bit version thereof is shown in Fig. 3.

The circuits 301 to 312 in Fig. 3 represents the diagram for realization of random number generator. The embodiment thereof is based on the linear-feedback shift register where the result from the output of the previous state is transferred to the input of the next state. The register is first set to some initial state which is known as a seed. The feedback is realized using the XOR circuits, where the positions of XOR circuits i.e. the bits that influence the change of the state are called taps. The feedback function is usually represented using the feedback polynomial, and in this embodiment the polynomial 311 is given by $P(x)=x^{16}+x^{14}+x^{13}+x^{11}+1$. Consequently, the taps are on the bits 16, 14, 13 and 11, wherein the number of taps is odd. Unlike the conventional embodiment, the present invention corresponds to the Galois configuration that is computationally efficient since the XOR operations are performed in parallel (unlike the Fibonacci embodiment). The system according to the invention is formed using D flip-flops circuits 312. The bits that do not represent taps are shifted to the right, while the bits that do represent taps are first fed to the XOR circuits together with the output bit and then shifted. For example, when the value of the bit equals (0) at the output then all the bits in the register shift for one position to the right and the value (0) from the output is transferred to the input 301. When the output value of the bit equals (1) the non-tap bits will be shifted unchanged, while the tap bits will be changed due to the XOR operation. The bit value (1) is transferred to the input 301.

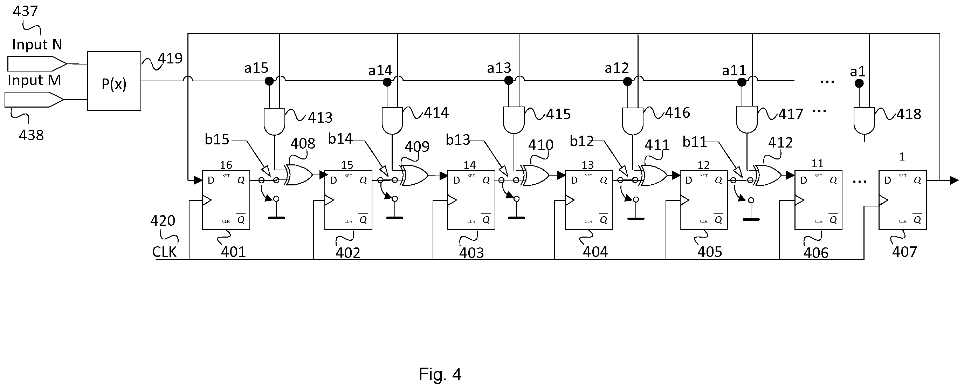

Fig. 4 shows the flexible version of the random number generator. Namely, the maximal output of random number generator should correspond to the value N 437. This means that, for example, if the value N=1024, 16-bit generator may produce numbers larger than 1024 which is not acceptable. Therefore, the present embodiment of the adaptive random number generator does not rely thereon. Presented are embodiments in the form of 16-bit, 10-bit, 9-bit, 8-bit and 7-bit numbers of random sequences, that correspond to N=65536 , N=1024, N=512, N=256, and N=127. The control circuit 419 can use polynomials of different order. The control signals a15 to a1 determine which XOR circuit should flip the input bit, thus, determining the position of taps. An active tap is determined in case when the control signal equals (1). The control signals b15 to b1 are used to set the first flip-flop in a series. By default all control signal b15 to b1 are set to the value (0), wherein the first flip-flop circuit in the series is a circuit 401. However, when the polynomial $P(x)= x^{7}+x^{6}+x+1$ is used, the first flip-flop circuit will represent the term $x^{7}$. In this case, the control signal b7 is set to the value (1), b7=1, which put the switch to the vertical position, thus resembling the value of the logical zero (0). The logical value zero (0) at the input of XOR circuit means that the bits value in the series of the random generator elements are transferred from the input to the output.

Further, the pseudo code for setting the control unit is given in the sequel.

```
Input N, M;
Set b15=b14=b13=b12=b11=b10=b9=b8=b7=b6=b5=b4=b3=b2=b1=0;
If N≤128 (7 bits)
        P(x)= x⁷+x⁶+x+1;
        a15=0;a14=0;a13=0;a12=0;a11=0;a10=0;a9=0;
        a8=0;a7=1;a6=1;a5=0;a4=0;a3=0;a2=0;a1=1;
        b7=1;

ElseIf N≤256 (8 bits)
        P(x)= x⁸+x⁶+x⁵+x⁴+1;
        a15=0;a14=0;a13=0;a12=0;a11=0;a10=0;a9=0;
        a8=1;a7=0;a6=1;a5=1;a4=1;a3=0;a2=0;a1=0;

        b8=1;
ElseIf N≤512 (9 bits)
        P(x)= x⁹+x⁵+1;
        a15=0;a14=0;a13=0;a12=0;a11=0;a10=0;a9=1;
        a8=0;a7=0;a6=0;a5=1;a4=0;a3=0;a2=0;a1=0;

        b9=1;
ElseIf N≤1024 (10 bits)
        P(x)= x¹⁰+x⁷+1;
        a15=0;a14=0;a13=0;a12=0;a11=0;a10=1;a9=0;
        a8=0;a7=1;a6=0;a5=0;a4=0;a3=0;a2=0;a1=0;



        b10=1;
Else

        P(x)= x¹⁶+x¹⁴+x¹³+x¹¹+1;
        a15=0;a14=1;a13=1;a12=0;a11=1;a10=0;a9=0;
        a8=0;a7=0;a6=0;a5=0;a4=0;a3=0;a2=0;a1=0;

End
```

In each clock cycle another random number generated within register. Hence, in each clock cycle the number is read from register and stored into the memory unit in circuit B as shown in Fig. 2a. The operation terminates when the M-th number is generated, which is controlled by the number of clock cycles.

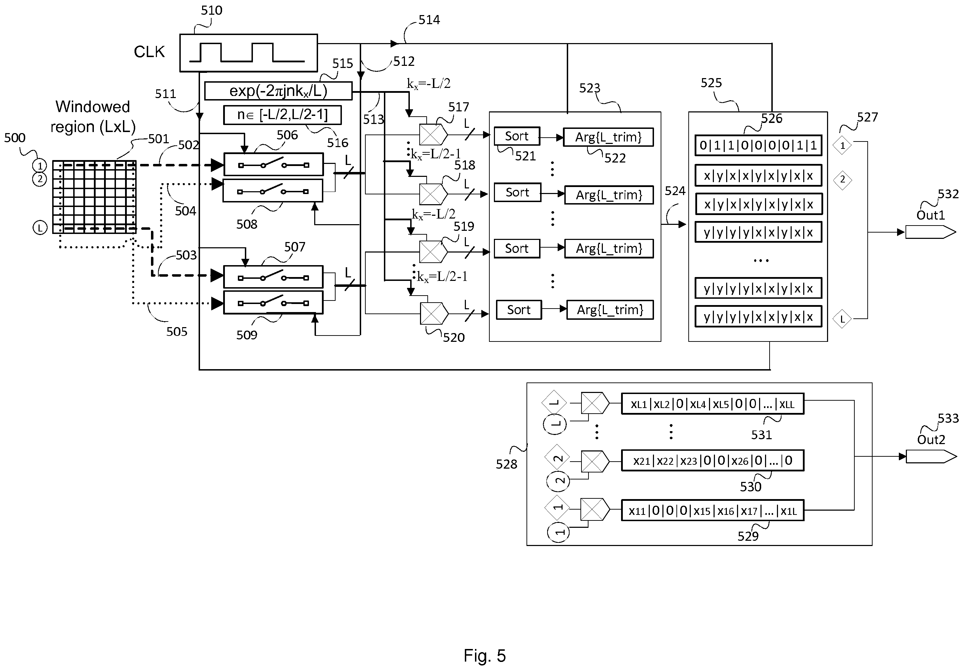

The circuit 129 shown in Fig. 5 performs image denoising in the case of the impulse noise. The denoising is performed on a block-by-block basis, where the size of the block is denoted by a parameter L, wherein square blocks are considered L×L. The operation of this circuit is based on the calculation of the robust L-estimation algorithm of the Fourier transform which is suitable for dealing with heavy-tailed noise. Assuming that the noise is equally distributed along the axes and, respectively, the image, the L-estimation algorithm for two-dimensional (2D) image block can be defined as a composition of two sequential one-dimensional (1D) forms.

At first, one-dimensional form is calculated:

$$r_p = sort\left\{\left(f\left(x+n,y\right)\mathrm{e}^{-j\pi n k_x/L}\right)\right\}.$$

The image block is denoted as $f(x+n,y+n)$ for $n \in [-L/2, L/2-1]$, wherein $f(x+n,y)$ represents one row within the image block. The elements are sorted in a non-decreasing order. The sorting operation will distribute the extreme values in $r_p$ (produced by the heavy-tailed noise) to the beginning and the end of the sorted sequence, and set to the value zero (0) using multiplication by associated $a_p$ coefficients. This operation is also known as $\alpha$-trimming.

The values of the coefficients $a_p$ are determined as filter coefficients:

$$a_p = \begin{cases} 1, & \text{for } p \in [(L-2)\alpha, \alpha(2-L)+L-1] \\ 0, & \text{elsewhere} \end{cases}.$$

The same procedure is repeated for all columns of the observed image block.

Thus, the extreme values, potentially corrupted by the noise, are trimmed and set to zeros. In the embodiment according to the present invention, the L-estimate approach is used for denoising by means of compressive sensing. The positions of non-corrupted samples are observed as available samples positions, while the corrupted samples are assumed unavailable. Therefore, after the sorting and $\alpha$-trimming procedure, the positions of trimmed samples (unavailable, corrupted samples) are set to the value (0), while the positions of non-trimmed samples (available samples) are set to the value (1).

As shown in Fig. 5, the L×L block is loaded to the input and stored to the memory unit 501 of said circuit 129. Said memory unit is represented in the form of a matrix. The image block is further transferred to the system using the switching modules for each row and column. The first row of the image block (with L entries) is fed over line 502 to the upper switch 506. The last row (with L entries) is fed over the line 503 to the upper switch 507. The remaining rows of the image block (L-2 rows) are transferred into the device by means of the corresponding switches. To this extent, there are L pairs of switches controlled by the system clock CLK 510. The switches 506, 507, and L-2 switches between them, are controlled by the line 511. In the first pass, the upper switches are closed allowing the rows 502, 503 and L-2 rows between them, to pass to the multipliers 517 to 520.

Moreover, there are L sets of multipliers, each set is associate to one L-row of processed image block. Each set comprises L multipliers. The first multiplier in the set is marked as 517-518, and the last multiplier in the set is marked as 519-520.

The rows in the image block are multiplied by the exponential basis vectors 515 given by $e^{-j\pi nk_x/L}$, where n is a vector given in 516. Each entry of a row has different value of frequency parameter $k_x$ starting from $k_x=-L/2$ do $k_x=L/2-1$.

After multiplication, L entries from each multiplier are fed to the circuit 523 which consist of sorting units (e.g. sort unit 521) and trimming units (e.g. unit 522). The sorting is done in non-decreasing order.

A block 522 is controlled by the CLK 510 over the line 514. This circuit determines the samples that will be discarded i.e a portion of samples from the left and right end of the sorted sequences that are potentially corrupted by the noise. It also stores the original positions i.e. positions in original unsorted vectors of the samples that should be kept. The information of positions from different blocks 522 are transferred into the memory circuit 525. The positions of available samples are marked by a value (1), other samples are marked by a value (0). An example for the first line 526 is shown in the Figure. The remaining elements are marked with a general notation x and *y,* wherein x represents the value 1 and *y* represents the value 0.

The same procedure is repeated for the columns of the image block 501, using the lower branch of switches 508, 509, and L-2 switches between the two, that are also controlled by means of the signal CLK 510 over the line 512. Further steps are the same as in the aforementioned case of rows processing.

The output 527 in the form of L×L values is multiplied by the values of the original image 500, also in the form of L×L values. The values of elements $x_{ij}$ within the block 529, 530, ... represent the sample values in the image, while the values zero (0) represents the positions of missing samples in the image. The output 532 contains the data on positions of available and missing samples, wherein the value (1) represents the available sample and the value (0) represents the missing sample. The output 533 provides for data on values of the available image samples.

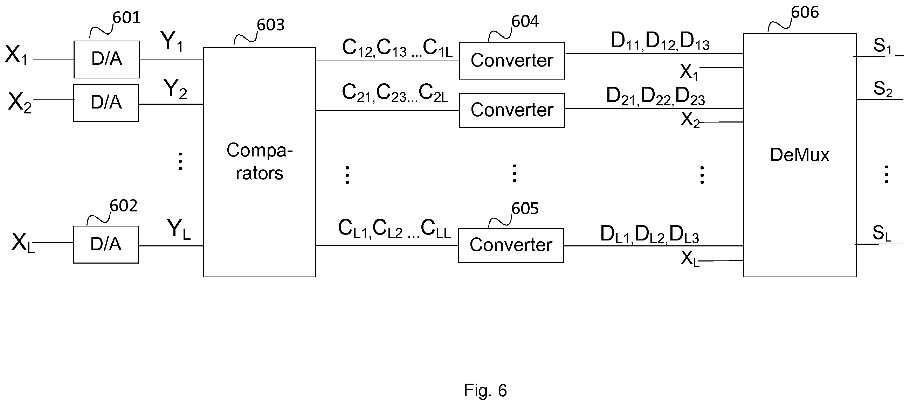

The Fig. 6 shows an embodiment where the input data are marked with $X_1, X_2,...,X_L$ and fed via D/A converters 601 to 602 into sorting circuits, wherein they result in the output values $Y_1, Y_2, ...,Y_L$. Said output values are fed to the inputs of fast analogue sorters (comparators 603) to obtain the non-decreasing sequence. The input signals are firstly compared among each other as follows:

$$C_{i,j} = \begin{cases} 1, & I_i \geq I_j \\ 0, & \text{otherwise} \end{cases}.$$

The comparators 603 at the output provide binary sequences $C_{i1}, C_{i2}, ..., C_{iL}$, za $i=1...L$, $j=1...L$, $j \neq i$. The converters 604 to 605 count the number of logical values (1) within sequences $C_{i1}, C_{i2}, ..., C_{iL}$ and then convert these numbers to the binary sequences $D_{i1}, D_{i2}, ...D_{iP}$, that serves as a selection signal for the demultiplexer 606 the role thereof is to determine the position of each input value $X_1, X_2, ..., X_L$ within the sorted sequence $S_1, S_2, ..., S_L$.

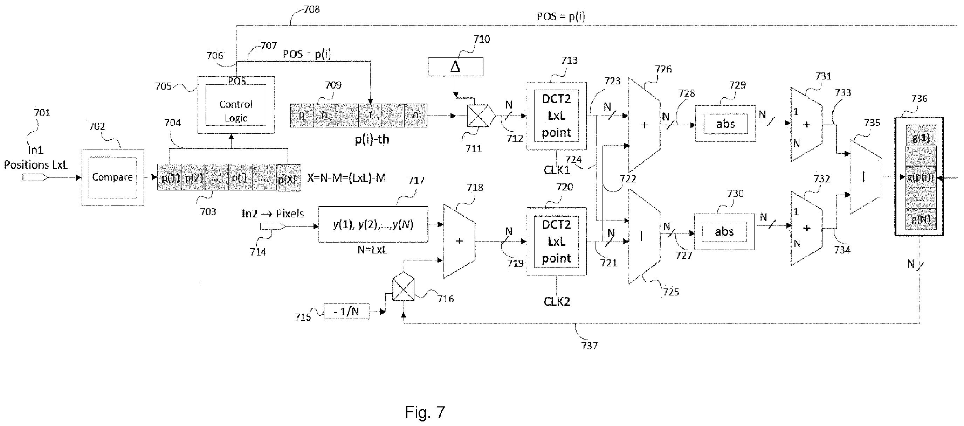

Fig. 7 shows an architecture of the adaptive gradient based algorithm for image reconstruction representing the essence of the invention. Said architecture is built around an iterative method for the reconstruction of missing image pixels. The goal of each iteration is to calculate the values of gradient for all positions of missing pixels, the gradient value being then used to update the values of missing pixels towards their exact values at each iteration. At the start, all missing pixels are preset to the value 128, as a midpoint between maximal and minimal pixel value. The gradient is calculated using the two-dimensional DCT transform which is a domain of image sparsity The procedure is applied on a block by block basis. The dimension of the blocks is denoted by L×L elements, wherein default values are 8×8 or 16×16 image elements.

There are two input data required for the gradient based image reconstruction algorithm. The first input contains the positions of available and missing image elements. It can be loaded directly from the user (input key 108 in Fig. 1), or can be obtained via the output Out 1 of the L-estimate circuit (Fig. 6), or from the circuit 130. The signal 701 is presented in the form of a matrix L×L where the value (1) denotes available pixel and the value (0) denotes missing pixel in the L×L image block.

The circuit 702 determines positions of the missing image elements. Said determination is carried out according to a method given by the following pseudo code:

```
i=0;
for h=1:L²
If Positions(h)=="0"
p(i)=h;
i++;
end
```

Note that the length p of the array 703 corresponds to the number of missing pixels $X=L \times L-M=L^2-M=N-M$, where N denotes the total number of pixels within the block $N=L^2$ and M denotes available number of all available pixels within the block.

The memory array 703 represents the input for the control logic circuit 705 which is responsible for pointing operation. The elements p of the array 703 are transferred into the control logic circuit 705 via multiple lines 704 for $p(1)$, $p(2)$ up to $p(X)$. For each element $p(i)$, the circuit 705 calculates a value of POS index on the line 706. The POS index controls the circuit 709 over the line 707, as well as the circuit 736 over the line 708.

The pseudo code for setting POS index in the circuit 705 is given below:

```
index=1;  i=1;
If i<Iter && index<N-M
        POS=p(index);
        index++; Iter --;
elseif i<Iter && index=N-M
        index=1; POS=p(index);
        index++; Iter--;
else
        break;
```

The POS index is pointing to a certain position of missing pixel that is currently changed toward the true value. Note that for POS=$p(i)$, the value (1) is set to the $i$-th position of the 709 and upon the iteration is finished, the gradient value will be assigned to the $i$-th position of the memory array 736. For each $i$ there is only one element with value (1) within the memory array 709.

The content of the memory 709 is multiplied by the constant Δ from a register 710, wherein the constant Δ is set to the maximal value of all pixels i.e. 255. Then, the array of N elements is fed to the circuit 713 for DCT2 transform. The circuit 713 is controlled by CLK1, which is set to change the state for each p(i) element loaded in the control logic circuit 705. This circuit 713 perform the 2D DCT transform of the array which has Δ value only on the *i*-th position. Hence, it is actually the DCT2 transform of the Kronecker δ function centred at the *p(i)*-th position: **D**(*k,l*)=*DCT* 2{Δδ(*p-p(i)*)}. Before applying the DCT2 transform, the circuit 713 rearranges the array into the corresponding L×L matrix in order to perform the two-dimensional DCT transform. At the output of the circuit 713, the matrix **D** is again represented by an array of N=L×L=L$^2$ elements (line 723).

The lower part of the Fig. 7 shows that the image block of the missing image pixels is transefrred to the input 714, such that at the positions of missing samples the value 128 is added to the default value (0). In the first iteration, all entries in the circuit 736 equal to the value 0, wherein the values of the image elements from the memory array 717 are transferred by means of N=L$^2$ lines 719 via an adder 718 to the circuit 720 for DCT2 transform.

The circuit 720 for a DCT2 transform performs a two-dimensional DCT transformation over the image block of the size L×L according to the formula:

$$\mathbf{Y}(k,l) = DCT2\{y\}, \text{and } y = \{y(i,j), i=1,...L, j=1,...L\}.$$

At the output of the circuit 720, the output matrix **Y** is represented by an array of N=L×L=L$^2$ elements (line 721). The circuit 720 is controlled by the CLK2 signal, which is set to change the state with each iteration *Iter* in the logic control circuit 705. Hence, the duration of a single CLK2 signal cycle is X=N-M times longer than the duration of CLK1 signal cycle, wherein X is the number of missing image samples. Both clock cycles are set in the logic control circuit 705, upon creating the array p in the circuit 703.

Let us observe now the lines 723 and 721, and the replica lines 724 - replica of the line for 723, and 722 - replica line for 721. Within the circuit 726, N entries from the line 723 are added to N entries from the line 722:

$$\mathbf{Y}\{n\} + \mathbf{D}\{n\}, \text{for } n = 1...N.$$

Within the circuit 725, N entries from the line 721 are subtracted from the line 724:

$$\mathbf{Y}\{n\} - \mathbf{D}\{n\}, \text{for } n = 1...N.$$

The output from both circuits 726 and 727 is N-length array that is further fed to the circuits 729 and 730. Said circuits 729, 730 perform the absolute values calculation.

Both circuits 731 and 732 calculate the sum of all elements of N lines at the input of said circuits. Therefore on the lines 733, 734 the values are obtained according to the formulas

$$\sum_{n=1}^{N} |\mathbf{Y}\{n\} + \mathbf{D}\{n\}| \text{ and } \sum_{n=1}^{N} |\mathbf{Y}\{n\} - \mathbf{D}\{n\}|.$$

Both values are used at the input of the circuit 735, where they are subtracted from each other. The resulting value is used to estimate the position p(i) within the memory array 736 containing the values of the gradient. Said array 736 is filled by all zero values at the beginning. One iteration is finished when the memory array 736 completes the update of all positions p(i) (for all *i=1,...,X)*. The POS index, pointing to the elements in the memory array 736, contains the values of the missing pixels positions. The values of the gradient in the memory array 736, at the positions of available pixels, are not updated and equal the values (0) in all iterations. This guaranties that the available pixels do not change their values through the iterations.

When POS index is equal to the last element p in the array 703, and the last cell in the array 736 on the position POS=*p(X)* is updated, the first iteration is finished. Then the current state in the array 736 is transferred via the line 737, wherein the value is multiplied 716 by the constant factor in 715. The blocks 736, 716 and 718 are also controlled by the CLK2 signal as in the case of 720. The updated values of the image pixels are obtained after passing the adder 718.

according to the formula $y(n)=y(n)-g(n)/N$. Afterwards, the procedure is repeated through the iterations. The iterations are terminated when the maximum number of iterations Iter is reached. The iterations are interrupted by the logic control circuit 705. The output is stored in the memory unit 717 and represents the result of a method that is the reconstructed image block. The iteration is repeated on all image blocks in order to obtain the entire reconstructued image.

The solution according to the present invention enables carrying out two different applications in a single concept and embodiment by means of compressive sensing. The system enables reconstruction of a natural image missing a great part of an useful information (up to 75% of the missing information). Furthermore, the same method enables filtering and removing of two types of noise from damaged natural images, that is a Gaussian noise and an impulse noise. The novelty with removing the Gaussian-type noise from natural images is comprised in the combination and the use of the method for reconstruction of an image by means of compressive sensing. At first, a damaged image comprising Gaussian noise is randomly sub-sampled, and afterwards said sub-sampled image is reconstructed by means of compressive sensing. Said method may be repeated in iterations, thus improving the quality of the reconstructed image. The method is repeated until the result satisfies required quality. The device according to the invention is also characterised by a flexible module for generating random sequences. Said module enables outstanding generation of random sequences of various lengths, which is decisive for work with images of various size and reconstruction thereof. Furthermore, the novelty of said embodiment of the L-estimation circuits lies in the possibility of sensing and selecting position of damaged image elements with images with the impulse noise, since L-estimation operations are tipically not used for such purposes.

## Claims

1. A method for image processing comprising compressive sensing-based image filtering and intelligent removal of noise from images, and for image reconstruction/decompression, comprising the following steps

   a) selecting by means of a switch (100) between image reconstruction mode according to compressive sensing and compressive sensing-based image filtering and reconstruction;
   b) selecting by means of a switch (119) between removing an impulse noise and removing a Gaussian noise;
   c) input of an image to be processed;
   d) activating by means of a switch (119) in the first position a L-estimation circuit (129) and, respectively, a sampling circuit (130), and a circuit (126) for generating random sequences;
   e) activating by means of the switch (119), in case of the impulse noise, a filter for L-estimation in the circuit (129) where all damaged and potentially damaged image elements are eliminated from the image, and transferring the remaining image elements to a reconstruction circuit (132) where missing or damaged image elements are reconstructed;
   f) sub-sampling by means of the switch (119), in case of the Gaussian noise, of the input image in random sequence by means of said circuit (130), wherein a smaller sub-sample of the obtained samples is transferred into said circuit (132) and used with noise removing and reconstructing the entire image;
   g) transferring signals from said circuit (130) into the circuit (132) where they are used with adaptive gradient reconstruction of the image.

2. A method according to claim 1, wherein the switch (119) in the first position determines removing the impulse noise, whereby L-estimation circuit (129) is activated.

3. A method according to claim 1, wherein the switch (119) in the second position determines removing the Gaussian noise, whereby the sampling circuit (130) and the circuit (126) for generating random sequences are activated.

4. A method according to claims 1 to 3, wherein said circuits (129, 130) are used to eliminate noise, giving as output a limited set of random image sequences and positions of image elements within the image frame, and using the output from the circuits (129, 130) as an input to the circuit (132) for image reconstruction.

5. A device for carrying out the method for image processing comprising compressive sensing-based image filtering and intelligent removal of noise from images, and for image reconstruction/decompression according to claims 1 to 4, *characterised in that* said device comprises input data control circuit, a circuit (126) for generating random sequences, a circuit (129) for carrying out L-estimation operations, and circuit (130) for random image sampling, and circuit (132) for a gradient image reconstruction.

6. A device according to claim 5, *characterised in that* the input data control circuit comprises a switch (100) for selecting operation between image reconstruction mode according to compressive sensing and compressive sensing-based image filtering and reconstruction, and a switch (119) for selecting between removing the impulse noise and removing the Gaussian noise.

7. A device according to claims 5 and 6, *characterised in that* the L-estimation circuit (129) enables in case of impulse noise sensing the position of damaged image elements.

8. A device according to any of claims 5 to 7, *characterised in that* it comprises a unit for storing image blocks, a unit for switching between lines and columns, a fast sorting circuit and a unit for cutting samples.

9. A device according to claim 8, *characterised in that* the fast sorting circuit used for fast data comparing in order to facilitate the method comprises a D/A converter, comparators giving a binary sequence as an output, a converter counting binary digits of value "1" in a sequence and giving a result in a binary form, and a de-multiplexing unit.

10. A device according to any of claims 5 to 9, *characterised in that* the module for generating random sequence comprises additional logical circuit and a control logic, thus enabling generation of variously long sequences of random numbers by altering generator polynomial function and by using control logic for monitoring and controlling flip-flop and other logical circuits.

11. A device according to any of claims 5 to 9, *characterised in that* it comprises a control logic circuit for controlling the number of iterations of the reconstruction and the position of the image elements reconstructed, a DCT2 circuit for carrying out a two-dimensional DCT transform on the set of incomplete image elements and a change of a constant $\Delta$, and a module for calculating an absolute value of DCT2.

Fig. 1

EP 3 154 022 A1

Fig. 2a

Fig. 2b

$$P(x) = x^{16} + x^{14} + x^{13} + x^{11} + 1$$

Fig. 3

Fig. 4

Fig. 5

Fig. 6

Fig. 7

**Europäisches Patentamt**
**European Patent Office**
**Office européen des brevets**

# EUROPEAN SEARCH REPORT

Application Number

EP 16 02 0360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Ljubisa Stankovi ET AL: "On the Reconstruction of Randomly Sampled Sparse Signals Using an Adaptive Gradient Algorithm", <br><br>, <br> 26 April 2015 (2015-04-26), XP055337214, <br> Retrieved from the Internet: <br> URL:https://arxiv.org/pdf/1412.0624v2.pdf <br> [retrieved on 2017-01-23] <br> * title * <br> * Section "1. Introduction", lines 6-12 * <br> * Algorithm 1 * <br> * page 10, line 1 - line 3 * <br> ----- | 1-11 | INV. <br> G06T5/00 |
| Y | SRDJAN STANKOVIC ET AL: "L-statistics based modification of reconstruction algorithms for compressive sensing in the presence of impulse noise", <br> SIGNAL PROCESSING., <br> vol. 93, no. 11, <br> 1 November 2013 (2013-11-01), pages 2927-2931, XP055337224, <br> NL <br> ISSN: 0165-1684, DOI: <br> 10.1016/j.sigpro.2013.04.022 <br> * Section "4.1 L-estimate primal-dual interior point method", lines 1-19 * <br> ----- <br> -/-- | 1-11 | |

|  |
|---|
| TECHNICAL FIELDS SEARCHED (IPC) |
| G06T |

The present search report has been drawn up for all claims

| Place of search | Date of completion of the search | Examiner |
|---|---|---|
| Munich | 26 January 2017 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 02 0360

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Iaisoe Stankovic ET AL: "Image Reconstruction from a Reduced Set of Pixels using a Simplified Gradient Algorithm", Telecommunications Forum Telfor (TELFOR), 2014 22nd, 27 November 2014 (2014-11-27), pages 497-500, XP055337807, DOI: 10.1109/TELFOR.2014.7034455 Retrieved from the Internet: URL:http://ieeexplore.ieee.org/ielx7/70218 31/7034339/07034455.pdf?tp=&arnumber=70344 55&isnumber=7034339 [retrieved on 2017-01-23] * page 498, right-hand column, line 2 - page 499, left-hand column, line 21 * | 11 | |
| A | OROVIC IRENA ET AL: "An Analog-Digital Hardware for L-Estimate Space-Varying Image Filtering", CIRCUITS, SYSTEMS AND SIGNAL PROCESSING, CAMBRIDGE, MS, US, vol. 35, no. 2, 3 June 2015 (2015-06-03), pages 409-420, XP035802449, ISSN: 0278-081X, DOI: 10.1007/S00034-015-0083-8 [retrieved on 2015-06-03] * figure 4 * | 8,9 | |

TECHNICAL FIELDS
SEARCHED      (IPC)

The present search report has been drawn up for all claims

| Place of search | Date of completion of the search | Examiner |
|---|---|---|
| Munich | 26 January 2017 | Winkler, Gregor |

EPO FORM 1503 03.82 (P04C01)

**EP 3 154 022 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104154999 A
- CN 103868591 A
- CN 102568017 B
- US 8666180 B2